# EUROPEAN PATENT APPLICATION

(11) **EP 1 698 660 A1**
(43) Date of publication of application: **06.09.2006**
(21) Application number: 05250411.5
(22) Date of filing: 27.01.2005
(51) Int. Cl.: C08L 23/02, C08L 77/00, C08J 11/06

(54) **Fiber matrix composite material made from recycled carpet**

(71) Applicant: Innovations, Inc., Atlanta, Georgia 30339 (US)
(72) Inventor: Pike, Mark, Rochester Minnesota 55902 (US)
(74) Representative: Clyde-Watson, Zöe

(57) **Abstract**

The invention relates to a composite structural material comprising a fiber dispersed in a fused matrix, wherein the fiber is derived from carpet, carpet recycle, carpet scrap, or mixtures thereof, and wherein the fused matrix comprises a thermoplastic comprising nylon, polyolefin, or mixtures thereof. The invention also relates to a method of manufacturing a rigid board composite structural material comprising the steps comminuting carpet to a predetermined particle size, adjusting the carpet feed stock to a form a balanced feed stock, introducing the feed stock into an extruder, and extruding the feed stock to form a structural composite comprising fiber dispersed in a fused matrix.

## Description

### Field of the Invention

The invention relates to a substantially thermoplastic composite material. This material can be used in the fabrication of a structural member. The structural members formed from the composite material can be formed in a variety of products, for example, as a hollow profile, a rigid board, a wallboard, a rail tie, tile backer board, roofing materials such as shingles and a substitute for sized lumber. The composite of the invention is formed from virgin or recycled thermoplastic materials and can comprise carpeting material and optional added components and comprises carpet fiber dispersed in a fused thermoplastic matrix. The invention also relates to a process for forming the composite material of the invention.

### Background of the Invention

Composite materials find a wide variety of uses in industrial and residential applications. Composites are used in the form of rough-cut lumber, sheet components, panels, profiles including a hollow profile, a rigid board, a wallboard, a rail tie, tile backer board, roofing materials such as shingles and a substitute for sized lumber and other general construction components. Specifically such composites are used for resurfacing of trailers including snowmobile trailers and truck/trailer beds, wagons, workbenches, and worktables. Additionally, composite materials are used to remodel and line walls, walkways, and livestock pens. Composites are also used for decorative purposes, such as in arts and crafts, or for other functional applications, such as to form signboards.

Such a composite requires the necessary chemical, and mechanical properties needed to fulfill its role in so many varied forms and end uses. In all applications the material must have the structural properties needed to withstand manufacture and transportation forces, various installation forces and loadings placed on the material after installation. In outdoor applications, the composite must possess adequate moisture resistance to prevent degradation or leakage from rain and humidity. When used, as surfacing for workbenches or trailers, a composite must be resistant to solvents, degreasing agents, and other chemicals with which it may come into contact. Additionally, the composite must be resistant to damage caused by rodents, insects, and other pests. In addition to the foregoing properties, a composite material should be relatively easy for the installer to worth with. Composites must be sawed, screwed, nailed, drilled and machined using common wood and metal tooling. Therefore, a substantial need exists for an economical composite material that possesses outstanding physical, chemical, and mechanical properties.

### Summary of the Invention

An economical composite material providing a combination of outstanding physical, chemical, mechanical, and thermal properties can be formed using material derived from nylon fiber in a thermoplastic matrix comprising a nylon polymer resin and a polyolefin resin. In one embodiment the composite can comprise carpeting recycle wherein the composite material comprises carpet fibers dispersed within a fused thermoplastic matrix derived form carpet components comprising nylon polymer resin and polyolefin resin. Carpet can be made from fiber that is taken and converted into the form of an individual fiber and combined into the form of a yarn, tow or fiber bundle. Fiber, in the terms of the invention, can refer to the separated or chopped individual fiber derived from recycled carpet and to the unwoven fiber used in carpet weaving. The term fiber can also relate to the to the comminuted fiber, chopped multi fiber yarn, processed tow or fiber bundle materials making up the material inputs. The fiber, fiber tow or fiber bundle can have a diameter of about 0.2 mm to 7 cm, 0.2 mm to 1 cm or about 0.2 mm to 5 mm.

The composite material is resistant to moisture, solvents, degreasing agents, insects and rodents. The material possesses a smooth consistency with superior flexibility, surface durability, and high compressive strength. The composite can be sawed, screwed, nailed, drilled and machined using common tools. The material paint bonds easily with an aqueous or oil-based primer, and can be applied as a laminate, shaped or contoured, or heat formed. The high water resistance of the composite renders it ideal for outdoor applications, such as railroad ties, construction framing, agricultural buildings, wherein the material will be exposed to extremes of moisture and humidity. The properties of the composite material can also render it an excellent substitute for lumber in some applications. The composite has been found to be longer lasting than wood and wood products such as wood profiles, structural members, and sized lumber. Many wood products are slowly becoming scarce and more expensive as demand increases. The composite material can also be used as a superior, economical substitute for structural members such as wood and concrete railroad ties, since the composite is substantially more resistant to flexing and cracking problems commonly encountered with concrete, wooden members and other materials.

Therefore, the present invention comprises a composite structural material comprising a fiber dispersed in a fused matrix. In one embodiment, the composite comprises fiber derived from carpet, carpet recycle, carpet scrap, or mixtures thereof. In one embodiment, the fused matrix comprises a thermoplastic comprising polyolefin, a polyamide such as nylon, or mixtures thereof. The composite structural material has a flexural elastic modulus (ASTM D790) of at least about 2 · 10⁵.

The invention also comprises a method of manufacturing a rigid board composite structural material. The method broadly comprises comminuting carpet to a suitable particle size, optionally adjusting the carpet feed stock so that the content of the feed is about 25-35% nylon, introducing the carpet feed stock into an extruder, and extruding the carpet feed stock to form a composite comprising fiber dispersed in a fused matrix.

### Detailed Description of the Invention

An economical composite material providing a combination of outstanding physical, chemical, mechanical, and thermal properties can be formed using material derived from nylon fiber in a thermoplastic matrix comprising a nylon polymer resin and a polyolefin resin. In one embodiment the composite can comprise carpeting recycle wherein the composite material comprises carpet fibers dispersed within a fused thermoplastic matrix derived form carpet components comprising nylon polymer resin and polyolefin resin.

An economical method of manufacturing a composite structural material is also an aspect of the invention. Broadly speaking, the method comprises comminuting carpet to a predetermined size range, adjusting the carpet feed stock to form a balanced carpet feed stock, introducing the carpet feed stock into an extruder, and extruding the feed stock to form a structural composite comprising fiber dispersed in a fused matrix.

The composition of the thermoplastic input can affect the composite properties. Nylon fiber is selected with a blend of polymer input to form the desired proportions of materials and mechanical properties. In a preferred embodiment, carpeting selected for use in the methods of the invention can affect the properties of the composite material. Standard carpeting is composed of at least three major components: fibers formed into a plurality of tufts, a backing material, and an adhesive construction material. The fibers are typically polyamide (i.e. nylon) fibers. Carpeting fibers may also be formed using any other suitable polymers. The backing material is commonly formed from a polyolefin such as polypropylene. Less commonly, the backing may be formed from natural fiber such as jute. The adhesive is commonly an aqueous dispersion of a polymer and other adhesive components, a hot melt thermoplastic adhesive, often an ABA block copolymer such as a styrene-butadiene rubber. The adhesive is used to anchor the tufts to the backing and is applied to the backing in the form of a hot melt that solidifies with cooling or a compounded aqueous emulsion that is later cured with heat drying. The composite can comprise a blend of any of these carpeting material and can also comprise virgin materials and fibers.

Any conventional carpeting type can be used in the methods of the invention. In a preferred embodiment, the carpeting used is comprised of nylon tufts, and can be formed from any suitable nylon polymer or mixtures of nylon polymers. In one embodiment, the tufts are formed from nylon 6. In another embodiment, the tufts are formed from nylon 6,6. In another embodiment, the carpeting tufts comprise a blend of nylon 6 or nylon 6,6. In yet another embodiment, the carpeting tufts comprise copolymers of nylon 6 and/or nylon 6,6. The nylon content of the carpet will vary with the type of carpet itself. In one embodiment, the carpeting used contains from about 10% to about 90% by weight of a nylon polymer or mixture of nylon polymers. In another embodiment, the selected carpeting contains from about 40% to about 55% by weight of a nylon polymer or a mixture of nylon polymers. The invention also encompasses the use of carpeting containing non-polyamide tufts. For example, carpeting with polyester tufts are also suitable for forming the composite material. The backing material used in the carpeting is preferably a polyolefin. In a preferred embodiment, the backing is polypropylene.

The carpeting used in the methods of the invention is generally new carpet ends, carpet recycle, carpet scrap, or mixtures thereof. Preferably, the carpeting typically new and unsoiled recycle from a manufacturing or retail waste stream that would otherwise be disposed of through incineration, burial in a landfill, or by other means. The carpeting may be irregular or otherwise damaged. Carpeting that does not meet manufacturer specifications for quality and therefore cannot be sold to a retail customer can be used. The carpeting may also be end pieces resulting from the cutting of carpeting to a size desired by a customer, and of such small size or shape as to have no economical value for sale. Alternatively, the carpeting may be post consumer (used) carpeting that would otherwise be disposed of. In this case, the carpeting is preferably inspected for removal of metal, hard particulate or other hard extruder damaging materials. While, the carpet does not require thorough cleaning to remove any dirt or other contaminants before being formed into the composite material, cleaning can in certain instances improve the processing environment.

In one embodiment of a method of manufacturing a structural composite material, the first step comprises forming a mixture of fiber comprising nylon and a thermoplastic input, when needed, typically comprising nylon polymer resin and polyolefin resin. New or virgin materials can be used to enhance physical or chemical properties. The blended input can be heated to a temperature to form a portion of the input into a melt matrix containing fiber from the input. The fiber in melt matrix is extruded into the products of the invention. In a second embodiment, comminuting the carpet to form a carpet feed stock having a predetermined particle size is a first step in composite manufacture. The particle size is selected to allow for easy separation of the components of the carpeting, and to create a size that is optimal for use in the extruder used to form the composite material from the carpeting. In a preferred embodiment, the carpet feed stock is formed by comminuting the carpet to a particle size of less than about 5 centimeters (cm) or less than 3 cm. In some embodiments, the carpet is comminuted into a particle size of about 1 inch (2.5 cm) or less. In some embodiments, the carpet is comminuted into a particle size of about 0.5 inches (1.25 cm) or less. The comminuting of the carpet size can also influence the size of the carpet fibers that will form the fibers dispersed in the fused matrix of the composite product.

The relative amounts of the primary components of the carpeting present in the carpet feed stock can also influence the properties of the resulting composite structural material. In one embodiment of the invention, therefore, the carpet feed stock is adjusted so that the one or more components of the carpeting are present in a predetermined amount relative to the other components. In one embodiment, the carpeting feed stock is adjusted so that the feedstock contains from about 20-wt% to about 50 wt% nylon. In a preferred embodiment, the carpeting feed stock is adjusted so that the feedstock contains from about 25-wt% to about 35 wt% nylon. In one embodiment, the carpet feed stock is adjusted by separating and classifying the components making up the carpeting (e.g., nylon 6, nylon 6,6, polypropylene).

The carpet feed stock may also be adjusted through the addition of other components, such as make-up virgin polymer or virgin fiber. Low melting thermoplastics can be added to aid in melt matrix formation to more efficiently distribute heat throughout the feedstock, causing the feed stock to flow more smoothly through the extruder. Therefore, in some embodiments, the method involves the addition of a thermoplastic not derived from carpeting so that the matrix of the composite is formed from a blend of a thermoplastic derived from the carpeting and at least one other thermoplastic from a different source. In one embodiment, the added component is a thermoplastic, and is added to the carpet feed stock in the form of a pellet or flake thermoplastic resin. Some examples of such thermoplastics include polystyrene, polypropylene, and polyethylene.

The carpet feed stock may also be adjusted through the addition of still other components. In some embodiments, reinforcing fibers are added to the feedstock to enhance the tensile strength, stiffness, or other desirable properties in the formed composite material. Such fibers are well known in the art and, by way of nonlimiting example, include those made from metal fiber or expanded metal, engineering plastics such as Kevlar® , nylons other than those otherwise present in the feedstock, engineered plastics, or glass.

The balanced carpet feed stock of the invention is introduced into an extruder, and extruded to form a composite structural material. The inventors have discovered that the resulting structural composite material, comprising a fiber dispersed within a fused matrix, possesses excellent physical, chemical, and mechanical properties.

The nature of the composite material will be influenced by the melting point of the input components and the temperatures within the extruder. In the composite, the fiber is derived from the carpet, carpet recycle, carpet scrap, or mixtures thereof, while the fused matrix comprises thermoplastic derived from carpet, carpet recycle, carpet scrap, or mixtures thereof, or from another source. One of skill in the art will readily recognize that which component of the carpeting forms the fiber and which component forms the fused matrix will be influenced by the temperatures inside the extruder along with the relative melting points of the carpeting components. The temperatures within the extruder are selected so that as the carpet feed stock is fed through the extruder, the carpet component or components having the lowest melting point or points melt to form the fused matrix of the composite material. The temperature within the extruder is further selected to be low enough such that the higher melting component of the carpeting is not melted, but retains its characteristic fiber structure within the formed fused matrix.

In one embodiment, the temperatures within the extruder are selected to be low enough that the tufts of the carpeting maintain their fibrous structure, while high enough such that the backing of the carpeting melts to form the fused matrix. In a preferred embodiment, the carpet feed stock comprises a blend of nylon 6 and nylon 6,6 tufts, the backing comprises polypropylene, and the temperatures within the extruder are selected so that the polypropylene melts to form the fused matrix, while the nylon 6/nylon 6,6 nylon fibers retain their fibrous structure and become dispersed within the polypropylene fused matrix. The melting point of nylon 6 is commonly 220-230° C, while the melting point of nylon 6,6 is commonly 245-255° C. The melting point of polypropylene, on the other hand, is commonly 150-160° C.

One of skill in the art will appreciate that the temperatures within the extruder can be selected to take advantage of these differential melting points to create a composite material wherein the polypropylene melts to form the fused matrix, while the nylon fibers retain their fibrous structures within the composite. In one embodiment of the invention, the extruder comprises at least one-barrel zone temperature of greater than about 250° C. In another embodiment, the extruder comprises at least one-barrel zone temperature of greater than about 300° C.

The pressure at which the carpet feed stock is extruded also influences the nature of the structural composite material. In one embodiment, the carpet feed stock is extruded at pressures above about 1.5 · 10³ psi. In another embodiment, the carpet feed stock is extruded at pressures above about 2 · 10³ psi.

Without wishing to be limited by theory, the melt processing of the carpet feed stock within the extruder causes the fused matrix-forming component of the carpet, usually a lower melting point component of the carpet, to melt and perhaps partially decompose. A second component, typically a higher melting point component of the carpeting, may be chemically modified but retains a characteristic fibrous structure within the melt matrix of the composite material. During the melting process, either or both of the components that form the fiber and fused matrix may be chemically modified. For example, the components may react with each other, or with other components. Or, the components may undergo oxidation caused by exposure to the atmosphere within the extruder. In the final composite material, however, the component forming the fused matrix will melt sufficiently to form a fused matrix, while the component forming the fibers will substantially form or retain a characteristic fibrous structure that is dispersed within the fused matrix. After exiting the extruder the fiber is held in the matrix and cools to a rigid structural material. Thus, the methods of the invention can result in the formation of a structural composite material derived from carpeting, but wherein the components of the carpeting are not melt-blended together. Rather, the composite material comprises fibers dispersed within, and intimately contacted by, a fused matrix material.

In a preferred embodiment, the fused matrix of the composite material is formed by polypropylene, while nylon and nylon 6,6 forms fibers dispersed within the fused matrix. In accordance with the foregoing theory, therefore, the nylon 6 and nylon 6,6 fibers may be chemically modified, but retain their characteristic fibrous structure within the fused matrix of the formed composite material, while the polypropylene backing melts and perhaps partially decomposes, but forms a melt in which the nylon fibers are embedded and adhered in the final composite. In these structures, due to the variation in the nature of polymer materials, the changes in the materials resulting from melt processing and the solubility of polymer in polymer, the fiber may acquire some proportion of matrix polymer and the matrix may acquire some proportion of fiber polymer.

The properties of the composite formed by the methods of the invention are also influenced by the rate at which the carpet feed stock is introduced into, and moved through, the extruder. The rate must be selected to allow sufficient time for the lower melting component intended to form the fused matrix to undergo the necessary extent of melting. The rate must be fast enough, however, so that the higher melting material intended to form the fiber dispersed within the fused matrix does not melt. The fibrous structure of the material is thus maintained in the resulting composite material product. The proper rate of introduction into the extruder, therefore, will necessarily vary with the melting points of the components used to form the fibers and the fused matrix. Selection of the proper extrusion rate based upon the melting points and other characteristics of the components making up the carpet feed stock can be easily established. Similarly, the rate at which the composite is extruded will vary according to several factors, including the moisture content of the composite and the thickness of the extruded material. In one embodiment, the rate of extrusion is from about 15 inches (160 cm)/minute to about 125 inches (300 cm) /minute.

Those of skill in the art will readily recognize that the composite material can be extruded into a wide variety of shapes and sizes to accommodate the desired application. The composite may, for example, be formed into a rigid board. Alternatively, the board may take on any desired geometric shape including, but not limited to, a rectangular, square, circular, or asymmetric form.

The composite material may also be formed to have any desired cross-sectional profile. The material may be formed as a hollow member or a solid, filled member. The composite may be extruded to take on a three-dimensional profile appropriate to form, for example, a door frame, a window frame, or a pipe.

In one embodiment, the composite has an arbitrary cross-section and a cross-sectional area of from about 10² cm² to 2 · 10⁶ cm². In one embodiment, the composite is formed into a shape having a thickness of from about 0.1 to about 2 centimeters and an indeterminate length. In one embodiment, the composite is formed to have a width of about 2 to 200 centimeters and an indeterminate length. In one embodiment, the length of the composite is less than about 10 meters. In one embodiment, the composite has a thickness of from about 0.1 to about 2 centimeters, a width of about 2 to 200 centimeters, and an indeterminate length.

Another aspect of the invention includes a composite structural material comprising a fiber dispersed in a fused matrix. In one embodiment, the fiber is derived from carpet, carpet recycle, carpet scrap, or mixtures thereof, and dispersed within a fused matrix. The fused matrix comprises a thermoplastic, and in one embodiment, the thermoplastic comprises a polyolefin, a polyamide such as nylon, or mixtures thereof. The thermoplastic may comprise a thermoplastic derived from carpeting. Alternatively, the matrix may comprise a blend of thermoplastic and a thermoplastic derived from a carpet. In yet another embodiment, the matrix may comprise a blend of a thermoplastic and a blend of two or more carpet sources.

In one embodiment, the matrix comprises about 20 to about 30 wt% nylon. In another embodiment, the matrix comprises about 0.1 to about 30 wt.% nylon 6. In yet another embodiment, the matrix comprises about 0.1 to about 30 wt% nylon 6,6.

In one embodiment, the composite material comprises about 25 to 35 wt% nylon. In another embodiment, the composite comprises about 0.1 to about 35 wt% nylon 6. In another embodiment, the composite comprises about 0.1 to 35 wt% nylon 6,6. In yet another embodiment, the composite comprises about 25 to 35 wt% of a polymer selected from nylon 6, nylon 6,6, or mixtures thereof, and about 35 wt% polyolefin by weight.

The fiber and/or fused matrix of the structural composite material can be derived from any conventional carpet. In one embodiment, the carpet comprises about 0 to 35 wt% nylon 6, about 0.1 to 35 wt% nylon 6,6 and about 25 to 35 wt% polyolefin by weight. In another embodiment, the carpet comprises about 20 to 40 wt% nylon 6, about 20 to 40 wt% nylon 6,6, and about 20 to 40 wt% polyolefin by weight.

The individual fibers that are dispersed within the fused matrix of the composite may vary in size, diameter, and structure. Due to the many variables of the melting and extrusion process, the composite may be formed to have these variations within a single, extruded material. Alternatively, the variables may be controlled to produce a composite wherein the fibers possess a defined range of size, diameter, or structure. In some embodiments the composite material includes some fibers that are partially melted, and other fibers that remain unmelted and are held together by other melted components, such as nylon or polypropylene

The structural composite material possesses excellent flexibility parameters allowing it to be useful in applications requiring a rigid composite material. In one embodiment, the composite material has a flexural elastic modulus (ASTM D790) of at least about 2·10⁵ psi. In another embodiment, the composite material has a flexural elastic modulus (ASTM D790) of at least about 2 · 10³ psi. In another embodiment, the composite material has a flexural elastic modulus (ASTM D790) of at least about 2.5 ·10³ psi. In another embodiment, the composite material has a flexural elastic modulus (ASTM D790) of at least about 6 · 10³ psi. In yet another embodiment, the composite material has a flexural elastic modulus (ASTM D790) of at least about 6.5 · 10³ psi.

The composite structural material also exhibits excellent resistance to moisture. In one embodiment, the composite material has a water absorption of less than about 3% by weight gain of water over a 24 hour period. This water resistance makes the composite an excellent candidate for use in moisture-rich environments, particularly in outdoor applications where the material will be exposed to the elements.

The composite structural material exhibits high compressive strength as well. In one embodiment, the composite material has a compressive strength (ASTM D695) of at least about 6.5 · 10³ psi.

The composite material additionally exhibits excellent tensile strength. In one embodiment, the composite material has a tensile strength (ASTM D638) of at least about 2 ·10³. In another embodiment, the composite material has a tensile strength (ASTM D638) of at least about 2.5 · 10³

The structural composite material may be cosmetically altered or otherwise structurally altered to adapt it for optimal use and/or appearance in a given application. For example, the material may comprise a dye or co-extruded cover layer to produce a desired color for the composite. Due to the presence of fibers dispersed within the matrix of the composite, the fibers can be brushed and raised from the composite as individual carpet fibers during processing of the material. The composite may also be imprinted with a design, or with grooves or patterns. For example, the composite material may be imprinted with a pattern of grooves that serves to increase traction, adhesion of tile or other material, on the surface for applications involving use of the composite material to resurface areas that may be walked upon. Other textures such as that resembling rough lumber, concrete surface, a composite or shake shingle, etc. can be added to the surface.

The composite material of the invention may be formed into any appropriate size and/or shape. In a preferred embodiment, the composite material is formed into a sheet. In one embodiment, the sheet has a thickness of about 0.1 centimeter to about 2 centimeters. In another embodiment, the sheet has a width of about 2 centimeters to about 200 centimeters.

The following examples were performed to further illustrate the invention that is explained in detail above. The following information illustrates the typical production conditions and compositions. The following examples and data contain a best mode.

### Example 1

A composite material was extruded according to a method of the invention. The material was then tested according to standard procedures to quantify various physical properties relevant to its use in commercial applications.

A sample of carpeting comprised of polypropylene backing and nylon tufts was shredded into 1 inch (2.5 cm ± 10%) chunks, such that the length of the individual carpet fibers were between 3/8 inch (0.95 cm) and 3 inches (7.6 cm) long. The carpet chunks were then introduced into an NRM extruder having a screw ratio of 30 to 1. The extruder was set at temperatures of 550 to 660 °F (290 to 350 °C). The barrel pressure of the NRM ranged from 600 psi (4 MPa) to 2100 psi (14.5 MPa). The composite material was extruded through a 54" (7 cm) EDI die at a rate of 47 inches (120 cm) /minute, and at a temperature of between 510 to 560 °F (266 to 294°C). The product was then sent through a three roll stacked chill roll system and formed into a 0.25 in x4 ft x 8 ft (0.64 cm x 1.2 m x 2.4 m) sheet. The sheet was then cut into samples that measured 0.25 in x 1 in x4 in (0.64 cm x 2.5 cm x 10 cm) in a standard dog bone shape. The sample was then cut down in the middle to 0.375 in (0.95 cm) wide to resemble a dog bone design.

Samples of the composite structural material were tested for flexibility using the standard ASTM D790, and compared to the flexibility of plywood samples. The data in Table I provide the flexural elastic modulus ratings for the composite produced according to Example 1. For purposes of comparison, Tables II and III provide the flexural elastic modulus data for plywood samples (with grain) and plywood samples (with cross grain), respectively.

As can be seen from the data, representative samples of the composite structural material exhibits uniform superior flexibility properties relative to the plywood samples.

**TABLE 1 NYLON BOARD, 3/8 INCH FLEX TEST**

| | ***Width (in)*** | ***Depth (in)*** | ***Displacement at Yield (Max Load) (in)*** | ***Load at Yield (Max Load (lbf)*** | ***Stress at Yield (Max Load) (psi)*** | ***Strain at Yield (Max Load) (in*/*in)*** | ***Modulus (AutYoung) (psi)*** |
|---|---|---|---|---|---|---|---|
| 1 | 0.510 | 0.387 | 0.628 | 34.6 | 4082 | 0.0405 | 254088 |
| 2 | 0.510 | 0.382 | 0.842 | 33.0 | 3993 | 0.0536 | 239850 |
| 3 | 0.508 | 0.382 | 0.602 | 31.4 | 3813 | 0.0383 | 209771 |
| 4 | 0.510 | 0.382 | 0.689 | 31.4 | 3799 | 0.0439 | 269231 |
| 5 | 0.510 | 0.384 | 0.639 | 34.6 | 4146 | 0.0409 | 215202 |
| Mean | 0.510 | 0.383 | 0.680 | 33.0 | 3966 | 0.0434 | 237628 |
| S.D. | 0.001 | 0.002 | 0.096 | 1.6 | 156 | 0.0060 | 25266 |
| C.V. | 0.176 | 0.571 | 14.104 | 4.9 | 4 | 13.8491 | 11 |

**TABLE II PLYWOOD FLEX TEST (WITH GRAIN)**

| | ***Width (in)*** | ***Depth (in)*** | ***Displacement at Yield (Max Load) (in)*** | ***Load at Yield (Max Load (lbf)*** | ***Stress at Yield (Max Load) (psi)*** | ***Strain at Yield (Max Load) (in*/*in)*** | ***Modulus (AutYoung) (psi)*** |
|---|---|---|---|---|---|---|---|
| 1 | 1.479 | 0.468 | 0.256 | 244.8 | 9068 | 0.0112 | 1076902 |
| 2 | 1.482 | 0.470 | 0.161 | 206.2 | 7558 | 0.0071 | 1251806 |
| 3 | 1.483 | 0.471 | 0.327 | 285.1 | 10399 | 0.0114 | 1209800 |
| 4 | 1.484 | 0.469 | 0.143 | 181.2 | 6661 | 0.0063 | 1131028 |
| 5 | 1.486 | 0.472 | 0.212 | 215.0 | 7793 | 0.0094 | 1120369 |
| Mean | 1.483 | 0.470 | 0.220 | 226.5 | 8296 | 0.0097 | 1157981 |
| S.D. | 0.003 | 0.002 | 0.075 | 39.9 | 1457 | 0.0033 | 71069 |
| C.V. | 0.175 | 0.336 | 33.908 | 17.6 | 18 | 33.9821 | 6 |

**TABLE III PLYWOOD FLEX TEST, CROSS GRAIN**

| | ***Width (in)*** | ***Depth (in)*** | ***Displacement at Yield (Max Load) (in)*** | ***Load at Yield (Max Load (lbf)*** | ***Stress at Yield (Max Load) (psi)*** | ***Strain at Yield (Max Load) (in*/*in)*** | ***Modulus (AutYoung) (psi)*** |
|---|---|---|---|---|---|---|---|
| 1 | 1.480 | 0.469 | 0.326 | 142.6 | 5256 | 0.0143 | 459834 |
| 2 | 1.487 | 0.469 | 0.633 | 103.9 | 3812 | 0.0278 | 257273 |
| 3 | 1.486 | 0.471 | 0.427 | 135.3 | 4925 | 0.0189 | 384053 |
| 4 | 1.486 | 0.471 | 0.430 | 115.2 | 4193 | 0.0190 | 261337 |
| 5 | 1.464 | 0.471 | 0.305 | 120.8 | 4463 | 0.0135 | 389428 |
| Mean | 1.481 | 0.470 | 0.424 | 123.6 | 4530 | 0.0187 | 350385 |
| S.D. | 0.010 | 0.001 | 0.130 | 15.5 | 574 | 0.0057 | 88369 |
| C.V. | 0.654 | 0.233 | 30.621 | 12.6 | 13 | 30.4875 | 25 |

Table IV displays the results of testing the composite material for its ability to resist water absorption. The test was conducted on a 0.25 inch (0.64 cm) thick nylon board produced according to Example 1. The ASTM standard for water absorption of plastics (D570) was followed throughout the test. Three specimens were dried in an oven for 24 hours at 50° C. They were then cooled in a desiccator, and immediately weighed. The conditioned specimens were placed in a container of distilled water maintained at 23° C for 24 hours. The specimens were then removed from the water one at a time; all surface water was wiped off with a dry cloth, and they were then weighed. The balance used in the test was a Satorius MC1 model AC210 S. This balance has a claimed reproducibility (standard deviation) to within 0.0001 g. The results of the test demonstrate that the composite material of the invention exhibits excellent resistance to moisture, and displays less than a 3% gain in weight in the absorption test.

**TABLE IV RESULTS FOR WATER ABSORPTION**

| Specimen # | Diameter (in) | Thickness (in) | Thickness after exposure (in) | Weight (g) before exposure | Weight (g) after exposure (24 hr) | Weight (g) gain after 24 hr period | Weight % gain after 24 hr period |
|---|---|---|---|---|---|---|---|
| 1 | 2 | 0.256 | 0.261 | 16.8210 | 17.3016 | 0.4806 | 2.86% |
| 2 | 2 | 0.254 | 0.261 | 17.2750 | 17.7752 | 0.5002 | 2.90% |
| 3 | 2 | 0.257 | 0.262 | 16.8970 | 17.3985 | 0.5015 | 2.97% |
| | | | | | | Average | 2.91% |
| | | | | | | St Dev | 0.001 |
| | | | | | | COV | 1.94% |

Table V displays the results obtained from testing the composite material for compressive strength. The test was performed according to ASTM D 695 at 68°F at ambient humidity of 30%.

**TABLE V COMPRESSION TEST, ROOM TEMP**

| | ***Width (in)*** | ***Thickness (in)*** | ***Displacement at (Max Load) (in)*** | ***Load at (Max Load (lbf)*** | ***Stress at (Max Load) (psi)*** | ***Strain at (Max Load (in*/*in)*** | ***Modulus (Man Young*) *(psi)*** |
|---|---|---|---|---|---|---|---|
| 1 | 0.508 | 0.255 | 0.217 | 961.60 | 7423.19 | 0.1447 | 121410.0 |
| 2 | 0.506 | 0.257 | 0.231 | 857.40 | 6593.25 | 0.1540 | 114566.3 |
| 3 | 0.507 | 0.256 | 0.234 | 889.40 | 6852.50 | 0.1560 | 116572.4 |
| 4 | 0.505 | 0.256 | 0.242 | 907.60 | 7020.42 | 0.1613 | 120003.5 |
| 5 | 0.505 | 0.254 | 0.234 | 874.60 | 6818.43 | 0.1560 | 120132.2 |
| Mean | 0.506 | 0.256 | 0.232 | 898.12 | 6941.56 | 0.1544 | 118536.9 |
| S.D. | 0.001 | 0.001 | 0.009 | 40.02 | 309.27 | 0.0061 | 2853.8 |
| C.V. | 0.258 | 0.446 | 3.941 | 4.46 | 4.46 | 3.9408 | 2.4 |

Table VI displays the results obtained from testing the composite material using the ASTM D-638 tensile test. The test was performed at a temperature of 130° F, and at a humidity level of 34%.

**TABLE VI FIBER REINFORCED PLASTIC TENSILE TEST ASTM D-638, 130°F**

| | ***Width (in)*** | ***Depth (in)*** | ***Displacement at (Max Load) (in)*** | ***Load at (Max Load), (lbf) (psi)*** | ***Stress at (Max Load)*** | ***Strain at (Max Load, (in*/*in)*** | ***Modulus (AutYoung) (psi)*** |
|---|---|---|---|---|---|---|---|
| 1 | 0.512 | 0.257 | 0.084 | 217.400 | 1652.18 | 0.0842 | 157055.5 |
| 2 | 0.509 | 0.255 | 0.057 | 223.900 | 1725.03 | 0.0572 | 187135.2 |
| 3 | 0.510 | 0.255 | 0.101 | 230.300 | 1770.86 | 0.1008 | 191744.4 |
| 4 | 0.510 | 0.256 | 0.118 | 218.300 | 1672.03 | 0.1178 | 171881.1 |
| 5 | 0.512 | 0.257 | 0.123 | 207.000 | 1573.14 | 0.1228 | 106031.7 |
| Mean | 0.511 | 0.256 | 0.097 | 219.380 | 1678.65 | 0.0966 | 162769.6 |
| S.D. | 0.001 | 0.001 | 0.027 | 8.632 | 75.05 | 0.0267 | 34525.6 |
| C.V. | 0.263 | 0.391 | 27.688 | 3.935 | 4.47 | 27.6877 | 21.2 |

The data in the foregoing tables clearly demonstrates the excellent physical, chemical, and mechanical properties of the composite material of the invention. The material exhibits properties of durability, moisture resistance, compressive strength, and tensile strength that render it an excellent material for use in a wide variety of applications, indoor and outdoor, and as substitutes for other, more traditional materials such as lumber and concrete.

### Example 2

A composite material is extruded according to a method of the invention. A sample of carpeting comprised of polypropylene backing and nylon tufts is shredded into 1 inch (2.54 cm) chunks, such that the length of the individual carpet fibers were between 3/8 inch (0.95 cm) and 3 inches (7.6 cm) long. Virgin metallocene polypropylene polymer (MI 1.5 gm-10 min⁻¹) is introduced into the extruder. The carpet chunks are then introduced into an NRM extruder having a screw ratio of 30 to 1. The extruder is set at temperatures of 550 to 660 °F (290 to 350 °C). The barrel pressure of the NRM ranges from 600 psi (4 MPa) to 2100 psi (14.5 MPa). The composite material is extruded through a 54" (7 cm) EDI die at a rate of 47 inches (120 cm) /minute, and at a temperature of between 510 to 560 °F (266 to 294°C). The product is then sent through a three roll stacked chill roll system and formed into a 0.25 in x 4 ft x 8 ft (0.64 cm x 1.2 m x 2.4 m) sheet. The sheet is then cut into samples that measured 0.25 in x 1 in x4 in (0.64 cm x 2.5 cm x 10 cm) in a standard dog bone shape. The sample was then cut down in the middle to 0.375 in (0.95 cm) wide to resemble a dog bone design.

### Example 3

A composite material is extruded according to a method of the invention. A sample of carpeting comprised of polypropylene backing and nylon tufts is shredded into 1 inch (2.54 cm) chunks, such that the length of the individual carpet fibers were between 3/8 inch (0.95 cm) and 3 inches (7.6 cm) long. Virgin Kevlar reinforcing fiber (10 cm length and about 10 micron diameter) is introduced into the extruder and a weight ratio of about 1 part Kevlar fiber per 10 parts of carpet recycles to form a carpet chunk blend. The carpet chunk blend is then introduced into an NRM extruder having a screw ratio of 30 to 1. The extruder is set at temperatures of 550 to 660 °F (290 to 350 °C). The barrel pressure of the NRM ranges from 600 psi (4 MPa) to 2100 psi (14.5 MPa). The composite material is extruded through a 54" (7 cm) EDI die at a rate of 47 inches (120 cm) /minute, and at a temperature of between 510 to 560 °F (266 to 294°C). The product is then sent through a three roll stacked chill roll system and formed into a 0.25 in x 4 ft x 8 ft (0.64 cm x 1.2 m x 2.4 m) sheet. The sheet is then cut into samples that measured 0.25 in x 1 in x4 in (0.64 cm x 2.5 cm x 10 cm) in a standard dog bone shape. The sample was then cut down in the middle to 0.375 in (0.95 cm) wide to resemble a dog bone design.

While the invention has been set forth above in detail, one of skill in the art will readily recognize that various modifications to the invention can be made, without departing from the spirit of the invention.

## Claims

1. A composite structural material comprising a fiber dispersed in a fused matrix, the composite comprising:
nylon fiber having a length of about 0.9 cm to 8 cm and a diameter of about 0.2 mm to 7 cm, dispersed in a fused matrix, the fused matrix comprising a thermoplastic comprising a nylon and a polyolefin;
wherein said composite structural material has a flexural elastic modulus (ASTM D790) of at least about 2· 10⁵ psi.

2. The composite material of claim 1, wherein said matrix comprises about 20 to 30 wt.-% Nylon and about 1 to 40 wt.-% of a polypropylene.

3. The composite material of claim 1, wherein said matrix comprises about 0.1 to 30 wt.-% Nylon 6 and about 1 to 40 wt.-% of a polypropylene.

4. The composite material of claim 1, wherein said matrix comprises about 0.1 to 30 % Nylon 6,6 and about 1 to 40 wt.-% of a polypropylene.

5. The composite material of claim 1, wherein said matrix comprises a blend of a virgin thermoplastic and thermoplastic derived from a carpet and the fiber has a diameter of about 0.2 mm to 1 cm.

6. The composite material of claim 1, wherein said matrix comprises a blend of a virgin thermoplastic and a blend of two or more carpet sources.

7. The composite material of claim 1, wherein said composite comprises about 25 to 35 wt.-% Nylon and about 1 to 40 wt.-% of a polypropylene.

8. The composite material of claim 1, wherein said composite comprises about 0.1 to 35 wt.-% Nylon 6 and about 1 to 40 wt.-% of a polypropylene.

9. The composite material of claim 1, wherein said composite comprises about 0.1 to 35 % Nylon 6,6 and about 1 to 40 wt.-% of a polypropylene.

10. The composite material of claim 1, wherein said carpet comprises about 1 to 35 wt.-% Nylon 6, about 0.1 to 35 wt.-% Nylon 6,6 and about 25 to 35 wt.-% polyolefin.

11. The composite material of claim 1, wherein said carpet comprises about 20 to 40 wt.-% Nylon 6, about 20 to 40 wt.-% Nylon 6,6 and about 20 to 40 wt.-% polyolefin.

12. A composite structural material comprising a fiber dispersed in a fused matrix, the composite comprising:
fiber having a diameter of about 0.2 mm to 7 cm, derived from carpet, carpet recycle, carpet scrap or mixtures thereof, dispersed in a fused matrix, the fused matrix comprising a thermoplastic comprising nylon, polyolefm or mixtures thereof;
wherein said composite structural material has a flexural elastic modulus (ASTM D790) of at least about 2 · 10⁵ psi.

13. The composite material according to any preceding claim, wherein said matrix comprises thermoplastic derived from carpet and the fiber has a diameter of about about 0.2 mm to 1 cm.

14. The composite material according to any preceding claim, wherein said matrix comprises a blend of a thermoplastic and thermoplastic derived from a carpet.

15. The composite material according to any preceding claim, wherein said matrix comprises a blend of a thermoplastic and a blend of two or more carpet sources.

16. The composite material of claim 1 or claim 12, wherein said composite comprises about 25 to 35 wt.-% Nylon.

17. The composite material of claim 1 or claim 12, wherein said composite comprises about 0.1 to 35 wt.-% Nylon 6.

18. The composite material of claim 1 or claim 12, wherein said composite comprises about 0.1 to 35 % Nylon 6,6.

19. The composite material of claim 1 or claim 12, wherein said composite comprises about 25 to 35 wt.-% of a polymer selected from Nylon 6, Nylon 6,6 or mixtures thereof and about 35 wt.-% polyolefin by weight.

20. The composite material of claim 1 or claim 12, wherein said carpet comprises about 0 to 35 wt.-% Nylon 6, about 0.1 to 35 wt.-% Nylon 6,6 and about 25 to 35 wt.-% polyolefin by weight.

21. The composite material of claim 1 or claim 12, wherein said carpet comprises about 20 to 40 wt.-% Nylon 6, about 20 to 40 wt.-% Nylon 6,6 and about 20 to 40 wt.-% polypropylene by weight.

22. The composite material according to any preceding claim, wherein said composite material has a tensile strength (ASTM D638) of at least about 2 · 10³ psi.

23. The composite material according to any preceding claim, wherein said composite material has a tensile strength (ASTM D638) of at least about 2.5 · 10³ psi.

24. The composite material according to any preceding claim, wherein said composite material has a compressive strength (ASTM D695) of at least about 6 · 10³ psi.

25. The composite material according to any preceding claim, wherein said composite material has a compressive strength (ASTM D695) of at least about 6.5 · 10³ psi.

26. A composite structural material comprising a fiber dispersed in a fused matrix, wherein said composite structural material has a flexural elastic modulus (ASTM D790) of at least about 2 · 10⁵ psi.

27. The composite of claim 26, wherein the composite comprises a blend of a polyolefin, a polyamide, and a hot-melted heat adhesive.

28. The composite material of any one of claims 1,12 or 26, wherein said matrix comprises about 20 to 30 wt.-% Nylon.

29. The composite material of any one of claims 1, 12 or 26, wherein said matrix comprises about 0.1 to 30 wt.-% Nylon 6.

30. The composite material of any one of claims 1, 12 or 26, wherein said matrix comprises about 0.1 to 30 wt% Nylon 6,6.

31. The composite material according to any preceding claim, wherein said composite material has a water absorption of less than about 3% by weight gain of water over a 24 hour period.

32. The composite material according to any preceding claim, further comprising at least one dye.

33. A sheet formed from the composite material according to any preceding claim, having a thickness of about 0.1 centimeter to about 2 centimeters.

34. A sheet formed from the composite material according to any preceding claim, having a width of about 2 centimeters to about 200 centimeters.

35. A composite structural material according to any preceding claim, comprising a fiber dispersed in a fused matrix, wherein the material is formed by introducing a carpet feed stock into an extruder, and extruding the carpet feed stock to form a structural composite member.

36. The composite material of claim 35, wherein the fiber is formed from a higher melting point component of the carpet feed stock, and the fused matrix is formed from a lower melting point component of the feed stock.

37. A method of manufacturing a rigid board composite structural material comprising the steps of:
(a) comminuting carpet to a particle size less than about 3 centimeters to form a carpet feed stock comprising fiber of claim 12, said fiber having a diameter of about 0.2 mm to 1 cm;
(b) adjusting the carpet feed stock to such that the content of the feed stock is about 25 to 35 wt% nylon forming a balanced carpet feed stock;
(c) introducing the balanced carpet feed stock into an extruder having at least one barrel zone temperature greater than about 250°C; and
(d) extruding the carpet feed stock to form a structural composite comprising fiber dispersed in a fused matrix, the composite having a thickness of about 0.1 to 2 centimeters, a width of about 2 to 200 centimeters and an indeterminate length.

38. The method of claim 37, wherein said carpet comprises carpet ends, carpet recycle, carpet scrap or mixtures thereof.

39. The method of claim 37 or 38, wherein said extruder has at least one barrel zone temperature greater than about 250° C.

40. The method of any one of claims 37 to 39, wherein said extruder has at least one barrel zone temperature greater than about 300° C.

41. The method of any one of claims 37 to 40, wherein said feed stock is extruded at pressures above about 1.5 · 10³ psi.

42. The method of any one of claims 37 to 41, wherein said carpet feed stock is extruded at pressures above about 2 · 10³ psi.

43. The method of any one of claims 37 to 42, wherein said composite material is extruded to a thickness of from about 0.1 to 2 centimeters.

44. The method of any one of claims 37 to 43, wherein the composite feed stock additionally comprises a pellet or flake thermoplastic resin.

45. The method of any one of claims 37 to 44, wherein the length of the composite is less than about 10 meters.
